# EUROPÄISCHE PATENTSCHRIFT

(11) **EP 2 050 945 B1**
(45) Veröffentlichungstag und Bekanntmachung des Hinweises auf die Patenterteilung: **09.01.2013**
(21) Anmeldenummer: 08164112.8
(22) Anmeldetag: 11.09.2008
(51) Int. Cl.: F02D 41/22, F02D 11/10

(54) **Verbrennungsmotor-Stelleinrichtung**
Combustion engine adjusting device
Dispositif de réglage d'un moteur à combustion

(30) Priorität: 17.10.2007 DE 102007049687
(43) Veröffentlichungstag der Anmeldung: 22.04.2009
(73) Patentinhaber: Pierburg GmbH, 41460 Neuss (DE)
(72) Erfinder: Kühnel, Hans-Ulrich, 41239 Mönchengladbach (DE); Sanders, Michael, 41564 Kaarst (DE); Bürger, Frank, 52335 Düren (DE); Ludwig, Norbert, 41379 Brüggen (DE)
(74) Vertreter: ter Smitten, Hans

(56) Entgegenhaltungen:
- EP-A2- 1 081 358
- DE-A1- 4 107 542
- DE-A1- 19 708 212
- JP-A- 11 132 058
- US-A1- 2002 073 962

## Beschreibung

Die Erfindung bezieht sich auf eine Verbrennungsmotor-Stelleinrichtung zum Verstellen eines Stellorgans sowie auf eine Fail-Safe-Anordnung hierfür.

Eine Verbrennungsmotor-Stelleinrichtung weist einen elektrischen Stellmotor auf, der ein mechanisches Stellorgan, beispielsweise eine Drosselklappe an oder in einem Verbrennungsmotor verstellt. Die Verbrennungsmotor-Stelleinrichtung weist hierzu eine Stellmotor-Steuerung mit einem Leistungsverstärker zur elektrischen Ansteuerung bzw. Energieversorgung des Stellmotors auf.

Für den Fall einer Fehlfunktion der Stelleinrichtung oder aber Fehlfunktionen an anderen Orten des Verbrennungsmotors ist eine Fail-Safe-Anordnung erforderlich, die im Störungsfall das Stellorgan, also den Stellmotor kontrolliert und in eine definierte Fail-Safe-Position stellt, in der Schäden des Verbrennungsmotors vermieden bzw. ein Notlauf des Verbrennungsmotors sicher gestellt werden kann.

Ein typischer Störungsfall ist das Zusammenbrechen der Versorgungsspannung für die Stellmotor-Steuerung und/ oder den Leistungsverstärker. Daher ist bei der Fail-Safe-Anordnung ein Energiespeicher vorzusehen, dessen Energie im Störungsfall verwendet wird, um das Stellorgan in die Fail-Safe-Position zurückzuführen. Im Stand der Technik sind u. a. mechanische Energiespeicher in Form von Federn bekannt, die das Stellorgan mechanisch in eine Fail-Safe-Position führen.

Aus WO 98/38422 ist eine elektrische Fail-Safe-Anordnung bekannt, die im wesentlichen aus einem elektrischen Energiespeicher in Form eines Kondensators besteht, der im Störungsfall den Leistungsverstärker der Stellmotor-Steuerung mit ausreichender elektrischer Energie versorgt, um den Stellmotor, und damit das Stellorgan, in die Fail-Safe-Position zu fahren.

Aus US 2002/073962 A1 ist eine Steuerung für eine Stelleinrichtung bekannt, die bei einem Störungsfall in eine Fail-Safe-Position bewegt wird.

Aufgabe der Erfindung ist es dem gegenüber, eine Verbrennungsmotor-Stelleinrichtung bzw, eine Fail-Safe-Anordnung hierfür zu schaffen, die eine höhere Zuverlässigkeit aufweist,

Die erfindungsgemäße Stelleinrichtung weist in der Fail-Safe-Anordnung einen eigenen separaten Leistungsverstärker auf, der mit dem Stellmotor verbunden ist und der von dem elektrischen Energiespeicher gespeist wird. Die Fail-Safe-Steuerung schaltet bei einem Störungsfall den Fail-Safe-Leistungsverstärker auf den Stellmotor durch, um den Stellmotor in seine Fail-Safe-Position zu fahren bzw. zu stellen.

Die Fail-Safe-Anordnung weist durch das Vorsehen eines separaten Leistungsverstärkers eine höhere Redundanz auf als dies bei Anordnungen nach dem Stand der Technik bekannt ist. Auch bei einem Ausfall des Leistungsverstärkers der Stellmotor-Steuerung bzw. bei Ausfall der Stellmotor-Steuerung selbst ist die Fail-Safe-Anordnung noch in der Lage, den Stellmotor in seine Fail-Safe-Position zu fahren. Die Einspeisung der elektrischen Fail-Safe-Energie erfolgt also parallel zu der Stellmotor-Steuerung direkt in den Stellmotor. Zum Aufschalten des Fail-Safe-Leistungsverstärkers auf den Stellmotor weist die Fail-Safe-Anordnung einen Fail-Safe-Schalter auf, der den Fail-Safe-Leistungsverstärker mit dem Stellmotor verbindet.

Vorzugsweise ist die Fail-Safe-Steuerung mit der Stellmotor-Steuerung derart elektrisch verbunden, dass die Fail-Safe-Steuerung einen Störungsfall feststellt, wenn die interne Betriebsspannung der Stellmotor-Steuerung einen Sollwert verlässt. Sobald der Stellmotor-Steuerung die Betriebsspannung nicht mehr zur Verfügung steht, ist ein ordnungsgemäßer Betrieb des Stellmotors und des Stellorgans nicht mehr möglich und muss das Stellorgan schnellstmöglich in seine Fail-Safe-Position gebracht werden.

Als Ursache für den Zusammenbruch der Betriebsspannung der Stellmotor-Steuerung kommen sowohl ein Zusammenbruch der Versorgungsspannung, durch die die gesamte Stelleinrichtung bzw. der Verbrennungsmotor mit elektrischer Energie versorgt wird, als auch ein Ausfall der internen Spannungsquelle der Stellmotor-Steuerung in Frage. Durch Überwachung der Betriebsspannung der Stellmotor-Steuerung durch die Fail-Safe-Steuerung werden beide Fehlerursachen durch Überwachung eines einzigen Parameters, nämlich der internen Betriebsspannung der Stellmotor-Steuerung, erfasst. Da ein Ausfall der Versorgungsspannung und ein Ausfall der internen Betriebsspannung der Stellmotor-Steuerung in der Praxis die häufigsten Störungsfälle sind, werden auf diese Weise mit einfachen Mitteln zuverlässig die meisten Fehlerfälle erfasst.

Gemäß einer bevorzugten Ausgestaltung ist die Fail-Safe-Steuerung mit dem Energiespeicher verbunden, der in der Praxis ein Kondensator oder eine Batterie ist. Hierdurch wird die Fail-Safe-Steuerung in die Lage versetzt, einen elektrischen Auflade-Parameter des Energiespeichers während des Aufladens des Energiespeichers zu überwachen, und ein Fehlersignal auszugeben, wenn der betreffende Parameter nicht in einem gespeicherten Sollwert-Bereich liegt.

Der Energiespeicher wird bei jedem Einschalten des Verbrennungsmotors, d. h. beim Einschalten der Versorgungsspannung aufgeladen. Der betreffende Parameter wird überwacht, indem beim Aufladen der zeitliche Spannungsverlauf der an dem Energiespeicher anliegenden Ladespannung erfasst wird. Der zeitliche Spannungsverlauf wird in der Fail-Safe-Steuerung mit einem Sollwert-Bereich abgeglichen. Liegt der zeitliche Spannungsverlauf außerhalb des Sollwert-Bereichs, wird ein Fehlersignal ausgegeben. Das Fehlersignal kann beispielsweise in einer zentralen Motorsteuerung abgelegt werden. Durch das Fehlersignal kann, muss jedoch nicht, ein Störungsfall ausgelöst werden.

Durch die Überwachung des Aufladens des Energiespeichers wird die Energiekapazität des Energiespeichers überwacht. Nur bei ausreichender gespeicherter Energie, die eine entsprechende Energiekapazität des Energiespeichers voraussetzt, ist sichergestellt, dass im Störungsfall genügend elektrische Energie zur Verfügung steht, den Stellmotor und das Stellorgan auch bei extrem ungünstigen Randbedingungen in die Fail-Safe-Position zurückzufahren.

Vorzugsweise ist die Fail-Safe-Steuerung mit dem Energiespeicher verbunden und überwacht nach dem Aufladen während des gesamten Verbrennungsmotor-Betriebes mindestens einen elektrischen Parameter des Energiespeichers in annähernd regelmäßigen Abständen oder ständig. Die Fail-Safe-Steuerung gibt ein Fehlersignal aus, wenn der betreffende elektrische Parameter von einem gespeicherten Sollwert abweicht.

Alle elektrischen Energiespeicher unterliegen einer gewissen unvermeintlichen Entladung. Ferner kann der Energiespeicher auch während des Betriebes des Verbrennungsmotors durch Einflüsse von außen beschädigt oder zerstört werden. Durch die Überwachung eines elektrischen Parameters des Energiespeichers auch während des Verbrennungsmotor-Betriebes kann sichergestellt werden, dass eine Beschädigung und insbesondere eine Verringerung der in dem Energiespeicher gespeicherten Energie zeitnah festgestellt werden kann.

Bei Ausgabe eines Fehlersignals durch die Fail-Safe-Steuerung kann veranlasst werden, den Energiespeicher erneut aufzuladen, wie dies normalerweise nur beim Einschalten des Verbrennungsmotors bzw. bei Inbetriebnahme der Verbrennungsmotor-Stelleinrichtung erfolgt.

Nach Abstellen der Versorgungsspannung bzw. des Verbrennungsmotors wird automatisch durch die Fail-Safe-Steuerung ein Störungsfall festgestellt und wird das Stellorgan in seine Fail-Safe-Position gefahren

Vorzugsweise schaltet die Fail-Safe-Steuerung, insbesondere unmittelbar nach der Erst- Aufladung des Energiespeichers nach dem Einschalten der Zündung, die Fail-Safe-Endstufe für einen kurzen Augenblick durch Schließen des Fail-Safe-Schalters auf den Stellmotor durch, wobei dabei mindestens ein elektrischer Parameter des Energiespeichers mit einem Sollwert verglichen wird und bei Abweichung des gemessenen Parameters von dem Sollwert ein Fehlersignal ausgegeben wird. Durch das kurzzeitige Durchschalten der Fail-Safe-Endstufe kann die Funktionstüchtigkeit der gesamten Fail-Safe-Anordnung kontrolliert werden.

Als elektrischer Parameter kann beispielsweise der Spannungsabfall an dem Energiespeicher beim Durchschalten der Fail-Safe-Endstufe, d. h. beim Schließen des Fail-Safe-Schalters gemessen werden. Wenn dabei ein Spannungsabfall der Ladespannung des Energiespeichers stattfindet, kann davon ausgegangen werden, dass die Fail-Safe-Anordnung funktioniert, da offensichtlich Strom zu dem Stellmotor fließt, der aus dem Energiespeicher kommt. Aus der Größe und dem zeitlichem Verlauf des Spannungsabfalls der Ladespannung an dem Energiespeicher kann ferner auf den Zustand des Energiespeichers selbst geschlossen werden, d. h. die altersbedingt zurückgehende Speicherkapazität des Energiespeichers kann ermittelt werden. Das Stellorgan steht beim Einschalten der Versorgungsspannung in seiner Fail-Safe-Position, die eine Anschlagsposition ist, in der das Stellorgan an einem Anschlag steht. Daher fließt ein hoher Strom durch den geschlossenen Fail-Safe-Schalter, so dass an dem Energiespeicher ein relativ starker Ladespannungsabfall stattfindet, dessen Interpretation sich gut zur Prüfung und Beurteilung der Funktionalität eignet.

Gemäß einer bevorzugten Ausgestaltung ist die Fail-Safe-Steuerung mit einer zentralen Motorsteuerung verbunden. Die Fail-Safe-Steuerung stellt einen Störungsfall fest, wenn sie von der Motorsteuerung ein Fehlersignal gemeldet bekommt. Auch die zentrale Motorsteuerung kann auf diese Weise bei erheblichen Funktionsstörungen ihrerseits einen Störungsfall in der Fail-Safe-Steuerung auslösen. Die Motorsteuerung muss sich danach nicht mehr um die Rückstellung des Stellmotors bzw. des Stellorgans in eine neutrale ungefährliche Fail-Safe-Position kümmern.

Gemäß einer bevorzugten Ausgestaltung weist die Fail-Safe-Anordnung eine mit dem Energiespeicher verbundene Ladungspumpe auf, mit der der Energiespeicher auf mindestens das Doppelte der Versorgungsspannung aufgeladen werden kann. Durch eine Vervielfachung der Ladungsspannung für den Energiespeicher kann auf gleichem Bauraum ein entsprechendes Vielfaches an Energie gespeichert werden.

Auf diese Weise können relativ kleine Energiespeicher, beispielsweise relativ kleine Kondensatoren, als Energiespeicher verwendet werden. Hierdurch werden Bauraum und Kosten gespart.

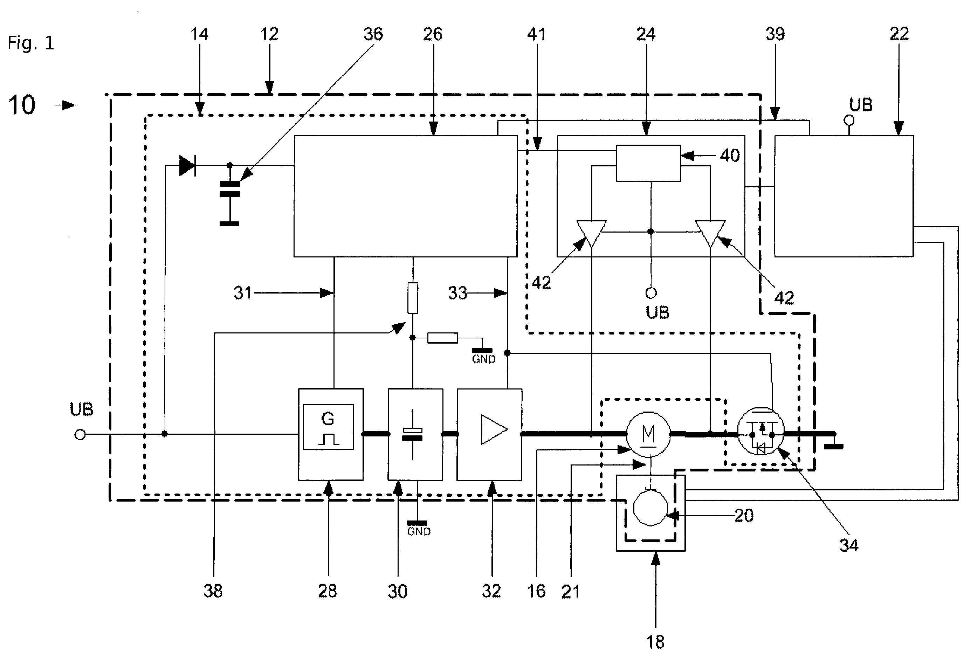

Im Folgenden wird ein Ausführungsbeispiel der Erfindung anhand der Figur 1 näher erläutert.

Die Figur 1 zeigt eine schematische Darstellung einer Verbrennungsmotor-Stelleinrichtung, eines Verbrennungsmotors und einer Verbrennungsmotor-Steuerung.

In der Figur 1 ist schematisch eine Verbrennungsmotor-Anordnung 10 dargestellt, wie sie typischerweise in einem Kraftfahrzeug vorzufinden ist.

Die Verbrennungsmotor-Anordnung 10 weist einen Verbrennungsmotor 18 auf, der eine Vielzahl von Stellorganen aufweist. Vorliegend ist beispielhaft als Stellorgan 20 eine Drosselklappe in einer Gasleitung dargestellt.

Die Verbrennungsmotor-Anordnung 10 weist eine Verbrennungsmotor-Stelleinrichtung 12 zum Verstellen des Stellorgans 20 auf. Die Verbrennungsmotor-Stelleinrichtung 12 besteht im Wesentlichen aus einem elektrischen Stellmotor 16, aus einer Stellmotor-Steuerung 24 und aus einer Fail-Safe-Anordnung 14.

Der elektrische Stellmotor 16 wird im Normalbetrieb von der Stellmotor-Steuerung 24 betrieben, die im Wesentlichen eine Logikelektronik 40 und zwei Leistungsverstärker 42 aufweist.

Eine zentrale Verbrennungsmotor-Steuerung 22 gibt über eine Steuerleitung Steuersignale an die Stellmotor-Steuerung 24 aus, die diese durch die Logik-Elektronik 40 und den Leistungsverstärker 42 in eine entsprechende Bestromung des Stellmotors 16 umsetzt, der wiederum das Stellorgan 20 über eine Stellwelle 21 bewegt. Die Stellmotor-Steuerung 24 kann auch Bestandteil der Verbrennungsmotor-Steuerung 22 sein.

Die Fail-Safe-Anordnung 14 weist eine Fail-Safe-Steuerung 26 zur Steuerung aller Komponenten der Fail-Safe-Anordnung 14 auf. Ferner weist die Fail-Safe-Anordnung 14 eine Ladungspumpe 28, einen Energiespeicher 30 in Form eines Kondensators, einen Fail-Safe-Leistungsverstärker 32 sowie einen Fail-Safe-Schalter 34 auf. Weitere Bestandteile der Fail-Safe-Steuerung 26 sind ein Spannungsteiler 38, der die an dem Energiespeicher 30 anliegende Kondensatorspannung herunterteilt, und ein Speicher-Kondensator 36, der bei Ausfall der Betriebsspannung U_{B} für eine ausreichende Zeit den Betrieb der Fail-Safe-Steuerung 26 sicherstellt. Die Ladungspumpe 28 kann auch durch einen Pullup-Wandler ersetzt werden.

Die Fail-Safe-Steuerung 26 ist über Steuer- bzw. Datenleitungen verbunden mit der Ladungspumpe 28, dem Fail-Safe-Schalter 34 und dem Fail-Safe-Leistungsverstärker 32, der Logikelektronik 40, der Stellmotor-Steuerung 24 sowie der zentralen Verbrennungsmotor-Steuerung 22.

Die Fail-Safe-Steuerung 26 steuert mit einer entsprechenden Steuerleitung 31 die Ladungspumpe 28 derart, dass diese den Energiespeicher 30 auf ein Vielfaches der Betriebsspannung U_{B} auflädt. Über einen Abgriff an dem Spannungsteiler 38 kann die Fail-Safe-Steuerung 26 die Ladespannung des Energiespeichers 30 stets abfragen bzw. kontrollieren.

In einem Störungsfall schließt die Fail-Safe-Steuerung 26 über die Steuerleitung 33 den Fail-Safe-Schalter 34 und den Fail-Safe-Leistungsverstärker 32, der auch einen Schalter im Sinne der Patentansprüche darstellt. Dadurch speist die in dem Energiespeicher 30 gespeicherte elektrische Energie den Fail-Safe-Leistungsverstärker 32, der wiederum den Stellmotor 16 ansteuert. Der Stellmotor 16 stellt dadurch das Stellorgan 20 in eine definierte Fail-Safe-Position. Über den der Fail-Safe-Steuerung 26 zugeordneten Speicher-Kondensator 36 zur kurzzeitigen Energieversorgung der Fail-Safe-Steuerung 26 ist die Fail-Safe-Prozedur auch dann sichergestellt, wenn die Betriebsspannung U_{B} zusammengebrochen sein sollte.

Ein Störungsfall kann durch die Fail-Safe-Steuerung auf vielfache Weise festgestellt werden. Eine Meldung eines Störungsfalls kann beispielsweise von der zentralen Verbrennungsmotor-Steuerung 22 über eine entsprechende Signalleitung 39 an die Fail-Safe-Steuerung 26 gemeldet werden. Über eine weitere Signalleitung 41 ist die Fail-Safe-Steuerung 26 mit der Stellmotor-Steuerung 24 verbunden. Über diese Leitung 41 detektiert die Fail-Safe-Steuerung 26 die interne Versorgungsspannung der Logik-Elektronik 40 der Stellmotor-Steuerung 24. Die interne Versorgungsspannung liegt üblicherweise bei 5 Volt. Wenn diese interne Versorgungsspannung der Logik-Elektronik 40 der Stellmotor-Steuerung 24 zusammen bricht, ist ein ordnungsgemäßer Betrieb des Stellmotors bzw. des Stellorgans durch die Stellmotor-Steuerung 24 nicht mehr gewährleitstet. Wenn ein Zusammenbruch der internen Versorgungsspannung der Logik-Elektronik 40 der Stellmotor-Steuerung 24 durch die Fail-Safe-Steuerung 26 festgestellt wird, stellt dies für die Fail-Safe-Steuerung 26 einen Störungsfall dar, der zur Folge hat, dass der Fail-Safe-Schalter 34 geschlossen und der Leistungsverstärker 32 durchgeschaltet werden, so dass der Stellmotor 16 das Stellorgan 20 in die Fail-Safe-Position stellt.

Bei Inbetriebnahme der Verbrennungsmotor-Anordnung, d. h., bei einem Kraftfahrzeug bei Einschalten der Zündung bzw. der Betriebsspannung, veranlasst die Fail-Safe-Steuerung 26 durch entsprechende Ansteuerung der Ladungspumpe 28 ein Aufladen des Energiespeichers 30. Über den Spannungsteiler 38 verfolgt die Fail-Safe-Steuerung 26 den zeitlichen Verlauf der Aufladung des Energiespeichers 30. Wenn der zeitliche Verlauf des Parameters "Ladespannung" nicht in dem gespeicherten Sollwert-Bereich liegt, gibt die Fail-Safe-Steuerung 26 ein entsprechendes Fehlersignal an die Verbrennungsmotor-Steuerung 22 aus. Im Rahmen einer On-Board-Diagnose kann dieser Fehler festgestellt und behoben werden. Alternativ kann über eine entsprechende Signalleitung das Fehlersignal auch an die Stellmotor-Steuerung 24 ausgegeben werden, die ihrerseits ein Fehlersignal an die Verbrennungsmotor-Steuerung 22 ausgibt. Als Fehlerquellen kommen hierbei der Energiespeicher 30 und die Ladungspumpe 28 in Frage.

Nach dem Aufladen des Energiespeichers 30 werden der Energiespeicher 30, der Fail-Safe-Schalter 34 sowie die Endstufe funktionell überprüft. Dies erfolgt dadurch, dass die Fail-Safe-Steuerung 26 den Fail-Safe-Schalter 34 und den Leistungsverstärker 32 synchron kurz durchschaltet, und dabei den Parameter "Ladespannung" des Energiespeichers 30 bzw. ihren zeitlichen Verlauf mit einem Sollwert vergleicht. Bei Abweichung der Ladespannung des Energiespeichers 30 von dem Sollwert wird ein entsprechendes Fehlersignal an die Verbrennungsmotor-Steuerung über die Signalleitung 39 ausgegeben.

Nach Anlegen der Versorgungsspannung U_{B} aktiviert die Fail-Safe-Steuerung 26 die Ladungspumpe 28 über die Steuerleitung 31, die den Energiespeicher 30 auflädt. Die Ladungspumpe 28 wird nach Erreichen der vordefinierten Ladespannung U_{E} des Energiespeichers 30 abgeschaltet und wird erst wieder eingeschaltet, wenn die ständig überwachte Ladespannung U_{E} des Energiespeichers 30 unter einen definierten Spannungswert abgesunken ist. Dieser Vorgang wiederholt sich ständig, solange die Betriebsspannung U_{B} anliegt und kein Störungsfall vorliegt.

Durch die vielfältigen Funktionsüberwachungen aller beteiligten Komponenten werden von der Fail-Safe-Anordnung 14 verschiedenste Fehlerereignisse wahrgenommen, nämlich ein Abfall der Versorgungsspannung U_{B}, eine Unterbrechung des Masseschlusses oder ein Defekt der Stellmotor-Steuerung 24. Ferner überprüft die Fail-Safe-Anordnung 14 ihre eigene Funktionstüchtigkeit und stellt eine hohe Redundanz her.

## Patentansprüche

1. Verbrennungsmotor-Stelleinrichtung (12) mit
einem elektrischen Stellmotor (16),
einem mit dem Stellmotor (16) verbundenen Stellorgan (20),
einer Stellmotor-Steuerung (24) mit einem Leistungsverstärker (42) zur elektrischen Energieversorgung des Stellmotors (16), und
einer Fail-Safe-Anordnung (14) zum kontrollierten Rückstellen des Stellmotors (16) in eine Fail-Safe-Position bei einem Störungsfall,
wobei die Fail-Safe-Anordnung (14) aufweist:
einen elektrischen Energiespeicher (30),
einen separaten Leistungsverstärker (32),
der mit dem Stellmotor (16) verbunden ist und von dem Energiespeicher (30) gespeist wird, und
eine Fail-Safe-Steuerung (26), die bei einem Störfall den Fail-Safe-Leistungsverstärker (32) auf den Stellmotor (16) durchschaltet, um den Stellmotor (16) in seine Fail-Safe-Position zu stellen.

2. Verbrennungsmotor-Stelleinrichtung (12) nach Anspruch 1, **dadurch gekennzeichnet, dass** die Fail-Safe-Steuerung (26) mit der Stellmotor-Steuerung (24) verbunden ist und einen Störungsfall feststellt, wenn die interne Betriebsspannung der Stellmotor-Steuerung (24) einen Sollwert verlässt.

3. Verbrennungsmotor-Stelleinrichtung (12) nach Anspruch 1 oder 2, **dadurch gekennzeichnet, dass** die Fail-Safe-Steuerung (26) mit dem Energiespeicher (30) verbunden ist und beim Aufladen des Energiespeichers (30) einen Auflade-Parameter überwacht, und ein Fehlersignal ausgibt, wenn der Auflade-Parameter nicht in einem gespeicherten Sollwert-Bereich liegt.

4. Verbrennungsmotor-Stelleinrichtung (12) nach einem der Ansprüche 1 bis 3, **dadurch gekennzeichnet, dass** die Fail-Safe-Steuerung (26) mit dem Energiespeicher (30) verbunden ist und mindestens einen elektrischen Parameter des Energiespeichers (30) prüft, und ein Fehlersignal ausgibt, wenn der Parameter von einem Sollwert abweicht.

5. Verbrennungsmotor-Stelleinrichtung (12) nach Anspruch 4, **dadurch gekennzeichnet, dass** die Fail-Safe-Steuerung (26) zur Prüfung des elektrischen Parameters den Fail-Safe-Leistungsverstärker (32) auf den Stellmotor (16) durchschaltet und dabei mindestens einen elektrischen Parameter des Energiespeichers (30) mit einem Sollwert vergleicht, und bei Abweichung ein Fehlersignal ausgibt.

6. Verbrennungsmotor-Stelleinrichtung (12) nach einem der Ansprüche 1 bis 5, **dadurch gekennzeichnet, dass** die Fail-Safe-Steuerung (26) mit einer zentralen Motorsteuerung (22) verbunden ist und einen Störungsfall feststellt, wenn von der Motorsteuerung (22) ein Fehlersignal gemeldet wird.

7. Verbrennungsmotor-Stelleinrichtung (12) nach einem der Ansprüche 1 bis 6, **dadurch gekennzeichnet, dass** die Fail-Safe-Anordnung (14) eine mit dem Energiespeicher (30) verbundene Ladungspumpe (28) aufweist, mit der der Energiespeicher (30) auf eine Ladespannung aufgeladen werden kann, die mindestens das doppelte der Versorgungsspannung U_{B} beträgt.

8. Fail-Safe-Anordnung (14) in einer Verbrennungsmotor-Stelleinrichtung (12) gemäß Anspruch 1 mit den Merkmalen einer der Ansprüche 1 bis 7.

## Claims

1. Combustion engine setting device (12) comprising
an electric servomotor (16),
an actuator (20) connected with the servomotor (16),
a servomotor control (24) with a power amplifier (42) for the supply of electric energy to the servomotor (16), and
a fail-safe arrangement (14) for a controlled resetting of the servomotor (16) to a fail-safe position in the event of a failure,
the fail-safe arrangement (14) comprising:
an electric energy storage (30),
a separate power amplifier (32) which is connected with the servomotor (16) and is fed from the energy storage (30), and
a fail-safe control (26) which, in the event of a failure, connects the fail-safe power amplifier (32) through to the servomotor (16) in order to set the servomotor (16) to its fail-safe position.

2. Combustion engine setting device (12) of claim 1, **characterized in that** the fail-safe control (26) is connected with the servomotor control (24) and detects a failure if the internal operating voltage of the servomotor control (24) deviates from a set value.

3. Combustion engine setting device (12) of claim 1 or 2, **characterized in that** the fail-safe control (26) is connected with the energy storage (30) and monitors a charging parameter when the energy storage (30) is charged, and supplies an error signal if the charging parameter is not within a stored set value range.

4. Combustion engine setting device (12) of one of claims 1 to 3, **characterized in that** the fail-safe control (26) is connected with the energy storage (30) and checks at least one electric parameter of the energy storage (30), and supplies an error signal if the parameter deviates from a set value.

5. Combustion engine setting device (12) of claim 4, **characterized in that**, for checking the electric parameter, the fail-safe control (26) connects the fail-safe power amplifier (32) through to the servomotor (16) and, in doing so, compares at least one electric parameter of the energy storage (30) to a set value and supplies an error signal in the event of a deviation.

6. Combustion engine setting device (12) of one of claims 1 to 5, **characterized in that** the fail-safe control (26) is connected with a central engine control (22) and detects a failure if the motor control (22) supplies an error signal.

7. Combustion engine setting device (12) of one of claims 1 to 6, **characterized in that** the fail-safe arrangement (14) comprises a charge pump (28) connected with the energy storage (30), by which the energy storage (30) can be charged to a charge voltage that is at least twice the supply voltage U_{B}.

8. Fail-safe arrangement (14) in a combustion engine setting device (12) of claim 1, comprising the features of one of claims 1 to 7.

## Revendications

1. Dispositif de réglage d'un moteur à combustion (12) comprenant
un servomoteur (16) électrique,
un actionneur (20) raccordé audit servomoteur (16),
une commande (24) du servomoteur comprenant un amplificateur de puissance (42) pour l'alimentation en énergie électrique dudit servomoteur (16), et
un ensemble de sécurité (14) pour remettre de manière contrôlée ledit servomoteur (16) en une position de sécurité en cas de défaillance,
ledit ensemble de sécurité (14) comprenant:
un accumulateur d'énergie (30) électrique,
un amplificateur de puissance (32) séparé, qui est raccordé audit servomoteur (16) et est alimenté par ledit accumulateur d'énergie (30), et
une commande de sécurité (26) qui, en cas de défaillance, relie ledit amplificateur de puissance de sécurité (32) audit servomoteur (16) pour mettre ledit servomoteur en sa position de sécurité.

2. Dispositif de réglage d'un moteur à combustion (12) selon la revendication 1, **caractérisé en ce que** la commande de sécurité (26) est raccordée à la commande du servomoteur (24) et détermine une défaillance si la tension de fonctionnement interne de la commande du servomoteur (24) départ d'une valeur de consigne.

3. Dispositif de réglage d'un moteur à combustion (12) selon la revendication 1 or 2, **caractérisé en ce que** la commande de sécurité (26) est raccordée audit accumulateur d'énergie (30) et surveille un paramètre de charge lors de la charge dudit accumulateur d'énergie (30) et fournit un signal d'erreur si ledit paramètre de charge ne se situe pas dans une gamme de valeurs de consigne enregistrée.

4. Dispositif de réglage d'un moteur à combustion (12) selon l'une quelconque des revendications 1 à 3, **caractérisé en ce que** la commande de sécurité (26) est raccordée audit accumulateur d'énergie (30) et contrôle au moins un paramètre électrique dudit accumulateur d'énergie (30) et fournit un signal d'erreur si le paramètre s'écarte d'une valeur de consigne.

5. Dispositif de réglage d'un moteur à combustion (12) selon la revendication 4, **caractérisé en ce que**, pour contrôler ledit paramètre électrique, la commande de sécurité (26) relie ledit amplificateur de puissance de sécurité (32) audit servomoteur (16) et compare au moins un paramètre électrique dudit accumulateur d'énergie (30) avec une valeur de consigne et fournit un signal d'erreur en cas de déviation.

6. Dispositif de réglage d'un moteur à combustion (12) selon l'une quelconque des revendications 1 à 5, **caractérisé en ce que** ladite commande de sécurité (26) est raccordée à une commande de moteur centrale (22) et détermine une défaillance si ladite commande de moteur (22) fournit un signal d'erreur.

7. Dispositif de réglage d'un moteur à combustion (12) selon l'une quelconque des revendications 1 à 6, **caractérisé en ce que** ledit ensemble de sécurité (14) comprend une pompe de charge (28), raccordée audit accumulateur d'énergie (30), par laquelle ledit accumulateur d'énergie (30) peut être chargé à une tension de charge qui est au moins deux fois la tension d'alimentation U_{B}.

8. Ensemble de sécurité (14) dans un dispositif de réglage d'un moteur à combustion (12) selon la revendication 1, ayant les caractéristiques de l'une quelconque des revendications 1 à 7.
